# EUROPEAN PATENT APPLICATION

(11) **EP 4 822 560 A2**
(43) Date of publication of application: **14.10.2026**
(21) Application number: 26168853.5
(22) Date of filing: 30.03.2026
(51) Int. Cl.: G06F 16/9032, G06F 3/0482, G06F 3/0484, G06F 16/904, G06F 16/954

(54) **AGENT TRAVERSAL OF MULTI-LAYER DATA STRUCTURE**

(30) Priority: 07.04.2025 US 202519172203
(71) Applicant: Google LLC, Mountain View, CA 94043 (US)
(72) Inventor: SHIN, Dongeek, Mountain View California, 94043 (US)
(74) Representative: Collingwood-Pierce, Alexandra Isobel Seymour

(57) **Abstract**

Implementations herein relate to a process for performing, by a computing device, a task based on a natural language query from a user. The natural language query can be received from a user at an initial state of a user interface (UI) of an electronic device, and can relate to a target task performable at a terminal state of the UI. A multi-layer data structure related to a plurality of states of the UI can then be identified. This plurality of UI states can include at least the initial state of the UI, the terminal state of the UI, and one or more intermediate states. The natural language query and the multi-layer data structure can then be processed, via a multimodal machine-learning model, to identify the terminal state of the UI at which the target task is performable. Other implementations can be described and/or claimed.

## Description

### Background

Generative models can be used to process natural language (NL) content, vision and/or other input(s), to generate output that reflects generative content that is responsive to the input(s). In some use cases, such models can be used to navigate through a series of screens or user interface (UI) states of a client device. For example, starting from an initial UI state, a user can input a query (e.g., a natural language query) that is related to an action to be performed at a different UI state of the client device. In these use cases, a generative model can target complex actions using a "frame-by-frame" approach. As used herein, the term "frame-by-frame" approach can describe an approach wherein the model computes an autoregressive input primitive (e.g., a mouse click on a UI element, entering text into a user-interactable text box, etc.) based on a given UI state.

In the frame-by-frame approach, the generative model can perform inference at each of the series of UI states between (and including) an initial state of the UI and an end state of the UI that is related to performance of the action (which can be referred to herein as a "terminal" state). As used herein, the term "inference" can refer to the process wherein the generative model takes as input a query such as a natural language query and generates a response based on that query as well as a dataset associated with the model. In the frame-by-frame approach, the result of an inference process can cause the client device to advance to a next UI state, where inference can again be repeated.

However, each inference performed during the frame-by-frame approach can take a finite amount of time to perform. As such, in use cases where completion of a user-requested task involves navigating through several UI states, the repeated inference can result in an undesirable level of latency in the system as the client device repeatedly performs inference in the state-by-state approach. Further, inference in the frame-by-frame approach can unnecessarily consume computational resources as a call to the generative model can be required for each UI state between the initial state and the terminal state.

### Summary

Implementations disclosed herein relate to a system for identifying a natural language query from a user at an initial user interface state of a client device, where the query relates to a task at a terminal user interface state. Some implementations can include identifying a multi-layer data structure related to multiple user interface states such as: the initial state, the terminal state, and intermediate states. The natural language query and the multi-layer data structure can be processed using a multi-modal machine-learning model to identify the terminal user interface state with which the task is associated. The target task can then be performed based on the identified terminal user interface state.

Implementations disclosed herein can reduce or eliminate various drawbacks with legacy techniques, such as those described above. For example, while conventional approaches typically rely on a step-by-step, frame-by-frame inference approach that requires multiple inference steps to complete a user-requested task across a plurality of UI states, implementations disclosed herein can employ a pre-constructed UI graph to enable faster interactions with fewer inference steps. For example, while the conventional step-by-step approach can result in undesirable levels of latency as the client device repeatedly performs inference in the state-by-state approach, the disclosed implementations can provide the model with a global view of potential actions to expedite the process of completing the user-requested task by bypassing unnecessary intermediate steps. As another example, the disclosed implementations can leverage deep links to take users directly to the desired UI states, reducing the number of inference steps and amount of latency in completing a user-requested task. As another example, the disclosed implementations can reduce consumption of computational and/or network resources since fewer inference calls are made to the multi-modal machine learning model relative to the frame-by-frame approach.

As a non-limiting example of some implementations disclosed herein, consider a user who wants to order a hamburger from a popular fast food restaurant using a smartphone application. The user can open the application and, instead of manually navigating through the menus, speak into the phone "Order a double cheeseburger with fries and a coke." The system, leveraging a pre-constructed graph of the application's UI states, recognizes the user's intent. Instead of performing inference for each UI state (e.g., opening the app, selecting the menu, choosing the burger category, selecting the double cheeseburger, adding fries, and then the coke), the system can use the pre-constructed UI graph to identify the terminal state: the order confirmation screen with the specified items. The application can then navigate directly to that screen, presenting the user with a "Confirm Order" button. This bypasses the multiple intermediate steps, significantly reducing the latency and computational intensiveness required compared to traditional, frame-by-frame approaches.

In some implementations, the multi-layer data structure can be organized into layers representing one or more initial UI states, one or more intermediate UI states, and one or more terminal UI states of the UI. The intermediate states can be accessed by selecting elements on an initial screen that corresponds to an initial UI state, and the terminal state can be reached by interacting with elements on intervening intermediate screens. For example, the initial layer might represent the home screen of a phone, an intermediate layer could represent the screen of a specific phone application after it is opened, and the terminal layer could be the specific settings page within that application that the user is trying to reach. In some instances, a starting point of a process to perform the action associated with the user's query can be found in, or associated with, the initial layer, and the destination point at which the task associated with the user's query is performable can be associated with a state found in or associated with the terminal layer. The intermediate layer can be between the initial and terminal layers, acting as a bridge between the starting and ending points. In some implementations, the terminal layer can contain states related to different applications or websites accessible on the device. Use of such a data structure can allow the system to quickly switch between different apps or web pages to complete a task.

In some implementations, the initial state of the multi-layer data structure can be, or associated with, the device's home screen. For example, a user might start from their home screen and ask the system to open a specific document in a particular app. The multi-layer data structure might be divided into sub-structures, each with its own starting and ending points. The starting point of the overall structure can be the same as the starting point of the first sub-structure, and the ending point of the overall structure is the same as the ending point of the second sub-structure. The system can use the multi-modal machine learning model to identify the correct sub-structure needed to complete the task. For example, if the user asks to play a song, the system might first identify the sub-structure related to the music application and then navigate to the specific song within that app. In some implementations, before performing the task, the system asks the user to verify the terminal state. For example, the system might display a preview of the final screen and ask the user, "Is this the correct page?" This prompt can be displayed while the user is still on the initial screen.

In some implementations, the multi-layer data structure can be built from one or more domain object model (DOM) tree structures. One or more of the DOM tree structures can be, for example, provided by a third party such as a developer, author, or hosting service of a webpage or application. Additionally or alternatively, one or more of the DOM tree structures can be generated by the client device based on a review of the webpage, and/or the application. In some implementations, the multi-layer data structure can be built from a plurality of DOM tree structures, and each DOM tree structure can correspond to a different state of the user interface. In other implementations, one or more of the DOM tree structures can correspond to a webpage or application (or portion thereof). To create the multi-layer data structure from the DOM tree structures, a program can review the various user-interfaceable elements of, or related to, the one or more DOM tree structures. The program can then create the multi-layer data structure based on existing DOM tree structures. Further, in some implementations, the program can be capable of subsequently updating the multi-layer data structure based on changes to the layout of a UI state or on a screen. For instance, if a button is moved on a website, the program can update the multi-layer data structure based on the corresponding DOM tree structure that reflects this change.

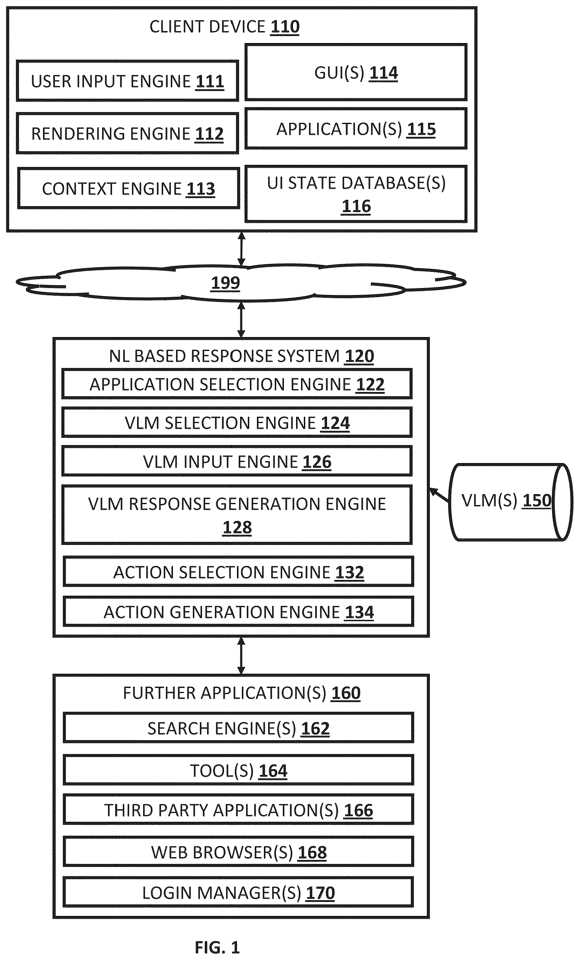

It will be understood that, although the specific examples of an application or a webpage are used in discussion of some implementations herein, other implementations can refer to different types of search engines, tools, or some other type of "application" as described with respect to element 160 of FIG. 1.

In some implementations, each state in the data structure can correspond to a screen with multiple interactive elements. The multi-modal machine learning model can be an on-device generative model that runs locally on the client device. The data structure can be associated with a specific application or web page accessible through the device. If a user's query mentions a particular application or web page, the system can select the corresponding data structure for processing. For example, if the user says, "Show me my recent activity on [social media app]," the system can select the data structure associated with the specified social media app. The system can also select the data structure based on the capabilities of the application or web page.

In some implementations, performing the target task can involve navigating the device from the initial state to the terminal state. In some implementations, this navigation can occur without showing any of the intermediate states. For example, the user can only see the home screen and then the final screen with the task completed. In additional or alternative implementations, this navigation can involve rendering one or more of the intermediate states, allowing the user to see the steps the system is taking. The navigation to the final state can be achieved with a single call to the machine learning model. In some implementations, the UI can be a graphical UI (GUI).

In the context of this disclosure, "UI state" refers to a specific configuration or visual representation of a user interface at a given point in time. The term can relate to various of the elements displayed on a GUI of the client device, their arrangement, and their current values. In implementations, a user can provide information to or otherwise interact with one or more of the elements of a UI state, which can then cause the client device to advance to a next UI state. Notably, a single UI state can include a plurality of elements, and each element can lead to a different UI state. For example, if a UI state is a UI state of an application for a food-delivery service, then the UI state can display two types of cuisine (e.g., "Italian" and "Indian.") If the user selects Italian cuisine, then the application can advance to a UI state that displays elements related to selection of Italian food (e.g., different restaurants, different dishes, etc.) However, if the user selects Indian cuisine, then the application can advance to a UI state that displays elements related to selection of Indian food. In some implementations, the UI state can be based at least partially on a DOM tree structure, as described in greater detail below.

The UI state can be displayed to a user via a UI. An example of such a UI can include a GUI that is able to render one or more screens related to a given UI state. Specifically, a GUI can refer to a type of visual display that is able to output information to a user such that a user is able to manipulate one or more elements of a screen. Examples of a GUI can be referred to or include a display, a touchscreen, a monitor, etc. In some implementations, the GUI can additionally be considered to include an input device such as a keyboard, a mouse, a joystick, etc. In some implementations, the input device can be part of a unitary physical device such as a physical digital assistant (PDA), a smartphone, etc. In other implementations, the input device can be separate from, but communicatively coupled with, the visual display element, for example via a wired or wireless connection.

The term "screen" can refer to a specific configuration of interactable, graphical, textual, or other elements that corresponds to a given UI state and is rendered via a GUI. A screen can include, for example, one or more interactable elements (e.g., icons, links, buttons, text input boxes, scroll bars, etc. ) through which a user can interact via an input device (e.g., through touch, typing, a mouse cursor, etc.) with the client device. While implementations herein are generally described with reference to graphical interfaces, it will be understood that the concepts herein can be modified to additionally or alternatively apply to some other type of UI such as an auditory-based UI, a tactile or haptic-based UI, etc.

As described herein, a generative model (GM) can refer to a machine learning model capable of generating generative vision data, generative audio data, generative textual data, and/or other forms of generative data. Some non-limiting examples of machine learning models that are capable of generating one or more forms of the generative data noted above include transformer-based machine learning models (e.g., encoder-decoder transformer models, encoder-only transformer models, decoder-only transformer models, etc. that optionally employ an attention mechanism or some other form of memory), stable diffusion-based machine learning models, recurrent neural network-based machine learning models, generative adversarial network-based machine learning models, sequence-to-sequence machine learning models, etc. Various machine learning models have demonstrated multimodal capabilities in that they are capable of processing inputs in various modalities (e.g., text-based inputs, vision-based inputs, audio-based inputs, etc.) and generating outputs in various modalities (e.g., text-based output, vision-based outputs, audio-based generative outputs, etc.).

It will be understood that implementations herein can be described with respect to a vision language model (VLM). As used herein, a VLM can refer to a type of GM that is capable of accepting inputs in a variety of modalities such as text-based inputs and vision-based inputs. In implementations, the text-based inputs can be based on inputs that are typed by a user into the phone via a keyboard that is presented to the user on the screen of the phone, wirelessly coupled with the phone, coupled with the phone by a wired connection, etc. In other implementations, the text-based inputs can be based on or related to a transcription of an audio input by the user (e.g., via a speech-to-text program). In these implementations, the text-based input can be in a user-readable form or in some type of machine language or non-user readable form. Based on the input, the VLM can generate and/or provide an output in one or more modalities including a text-based output, a visual output, an audio output, and/or some other type of output.

The preceding is presented as an overview of only some implementations disclosed herein. These and other implementations are disclosed in additional detail herein.

### Brief Description of the Drawings

FIG. 1 depicts a block diagram of an example environment that demonstrates various aspects of the present disclosure, and in which some implementations disclosed herein can be implemented.
FIG. 2 depicts an overview of an example of controlling a user interface using a VLM, in accordance with various implementations.
FIG. 3 illustrates an example of a UI multi-layer data structure, in accordance with various implementations.
FIG. 4 illustrates an example of an annotated image of a screen related to a first UI state, in accordance with various implementations.
FIG. 5 illustrates an alternative example of an annotated image of a screen related to a second UI state, in accordance with various implementations.
FIG. 6 illustrates a flow diagram of an example technique for causing a task to be performed by a client device in response to a user query, in accordance with various implementations.
FIG. 7 depicts an example architecture of a computing device, in accordance with various implementations.

### Detailed Description

Turning now to FIG. 1, a block diagram of an example environment that demonstrates various aspects of the present disclosure, and in which implementations disclosed herein can be implemented, is depicted. The example environment includes a client device 110, a natural language (NL) response system 120, and one or more further applications 160 (e.g., applications external to a VLM or a dialogue application executed on the client device 110). Although illustrated separately, in some implementations, all or aspects of the NL based response system 120 and all or aspects of the one or more further applications 160 can be implemented as part of a cohesive system.

In some implementations, all or aspects of the NL based response system 120 can be implemented locally at the client device 110. In additional or alternative implementations, all or aspects of the NL based response system 120 can be implemented remotely from the client device 110 as depicted in FIG. 1 (e.g., at one or more remote server(s)). In those implementations, the client device 110 and the NL based response system 120 can be communicatively coupled with each other via one or more networks 199, such as one or more wired or wireless local area networks ("LANs," including Wi-Fi LANs, mesh networks, Bluetooth, near-field communication, etc.) or wide area networks ("WANs", including the Internet, one or more cellular networks, one or more satellite-based networks, etc.).

The client device 110 can be, for example, one or more of: a desktop computer, a laptop computer, a tablet, a mobile phone, a computing device of a vehicle (e.g., an in-vehicle communications system, an in-vehicle entertainment system, an in-vehicle navigation system), a standalone interactive speaker having a display, a smart appliance such as a smart television or smart refrigerator, and/or a wearable apparatus of the user that includes a computing device (e.g., a watch of the user having a computing device, glasses of the user having a computing device, a virtual or augmented reality computing device). Additional and/or alternative client devices can be provided.

The client device 110 can execute one or more applications, such as application(s) 115, via which queries can be submitted and/or response(s) to the query can be rendered (e.g., audibly and/or visually). The application(s) 115 can be an application that is separate from an operating system of the client device 110 (e.g., one installed "on top" of the operating system) - or can alternatively be implemented directly by the operating system of the client device 110. For example, the application(s) 115 can be a web browser installed on top of the operating system (OS), or can be an application that is integrated as part of the operating system functionality. The application(s) 115 can interact with the UI control system 120.

In various implementations, the client device 110 can include a user input engine 111 that is configured to detect user input provided by a user of the client device 110 using one or more user interface input devices. For example, the client device 110 can be equipped with one or more microphones that capture audio data, such as audio data corresponding to spoken utterances of the user or other sounds in an environment of the client device 110. Additionally, or alternatively, the client device 110 can be equipped with one or more vision components that are configured to capture vision data corresponding to images and/or movements (e.g., gestures) detected in a field of view of one or more of the vision components. Additionally, or alternatively, the client device 110 can be equipped with one or more touch sensitive components (e.g., a keyboard and mouse, a stylus, a touch screen, a touch panel, one or more hardware buttons, etc.) that are configured to capture signal(s) corresponding to touch input directed to the client device 110. Some instances of a query described herein can be a query that is formulated based on user input provided by a user of the client device 110 and detected via user input engine 111. For example, the query can be a typed query that is typed via a physical or virtual keyboard, a suggested query that is selected via a touch screen or a mouse, a spoken voice query that is detected via microphone(s) of the client device, or an image query that is based on an image captured by a vision component of the client device.

In various implementations, the client device 110 can include a rendering engine 112 that is configured to provide content (e.g., an NL based summary) for audible and/or visual presentation to a user of the client device 110 using one or more user interface output devices (e.g., a GUI 114 as discussed below). For example, the client device 110 can be equipped with one or more speakers that enable content to be provided for audible presentation to the user via the client device 110. Additionally, or alternatively, the client device 110 can be equipped with a display or projector that enables content to be provided for visual presentation to the user via the client device 110.

In various implementations, the client device 110 can include a context engine 113 that is configured to determine a context (e.g., current or recent context) of the client device 110 and/or of a user of the client device 110. In some of those implementations, the context engine 113 can determine a context utilizing current or recent interaction(s) via the client device 110, a location of the client device 110, profile data of a profile of a user of the client device 110 (e.g., an active user when multiple profiles are associated with the client device 110), and/or other data accessible to the context engine 113. For example, the context engine 113 can determine a current context based on a current state of a query session (e.g., considering one or more recent queries of the query session), profile data, and/or a current location of the client device 110. As an example, the context engine 113 can determine a current context based on which application is active in the foreground of the client device 110, a current or recent state of the active application, and/or content currently or recently rendered by the active application. A context determined by the context engine 113 can be utilized, for example, in supplementing or rewriting a query that is formulated based on user input, in generating an implied query (e.g., a query formulated independent of user input), and/or in determining to submit an implied query and/or to render result(s) (e.g., an NL based summary) for an implied query.

In various implementations, the client device 110 can include one or more GUIs 114. As previously described, a GUI 114 can be a physical or virtual element that is configured to allow a user to receive information from, and provide information to, one or more of the applications 115 of the client device 110. As previously described, in some implementations, a GUI 114 can be configured to render one or more interactable elements (e.g., icons, links, buttons, text input boxes, scroll bars, etc. ) through which a user can interact (e.g., through touch, typing, a mouse cursor, etc.) with the application(s) 115.

In various implementations, the client device 110 can additionally include one or more UI state databases 116. In various implementations, the UI state database(s) 116 can be implemented as memory such as non-volatile memory (NVM) like flash memory, a hard disk drive (HDD), read-only memory (ROM), etc. In some implementations, the UI state database(s) 116 can be additionally or alternatively implemented as volatile memory such as cache memory, random access memory (RAM), etc. In some implementations, one or more of the UI state databases can be received and/or updated based on information received from the NL based response system 120.

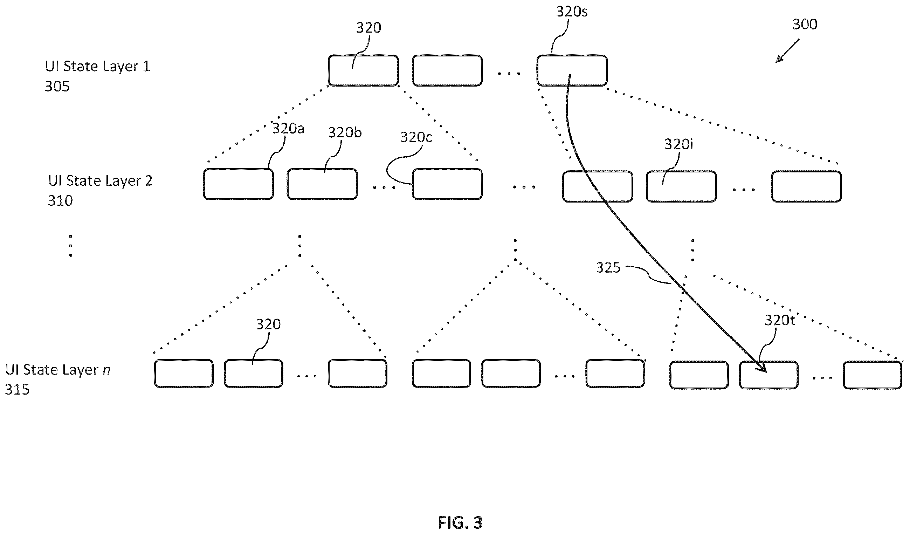

The UI state database(s) 116 can include information related to one or more of a plurality of UI states. As previously described, a UI state can refer to a specific configuration or visual representation of a UI at a given point in time including the arrangement and/or current values of various displayed elements. In some implementations, the UI states can be organized into layers of a multi-layer data structure. An example of such a multi-layer data structure is described below with reference to FIG. 3. In some implementations, each screen of a webpage or an application can correspond to a different UI state in the multi-layer data structure. For example, a home screen of an application can correspond to a first UI state. Then, if the user selects an option in the application that causes a second screen to load, then that second screen can correspond to a second UI state. Additionally or alternatively, in some implementations, a single UI state can correspond to a plurality of different screens of a webpage or an application. In various implementations, these multi-layer data structures can be generated based on, for example, crawling the web, crawling software applications, etc.

Further, the client device 110 and/or the NL based response system 120 can include one or more memories for storage of data and/or software applications, one or more processors for accessing data and executing the software applications, and/or other components that facilitate communication over one or more of the networks 199. In some implementations, one or more of the software applications can be installed locally at the client device 110, whereas in other implementations one or more of the software applications can be hosted remotely (e.g., by one or more servers) and can be accessible by the client device 110 over one or more of the networks 199.

Although aspects of FIG. 1 are illustrated or described with respect to a single client device having a single user, it should be understood that such description is for the sake of example and is not meant to be limiting. For example, one or more additional client devices of a user and/or of additional user(s) can also implement the techniques described herein. For instance, the client device 110, the one or more additional client devices, and/or any other computing devices of a user can form an ecosystem of devices that can employ techniques described herein. These additional client devices and/or computing devices can be in communication with the client device 110 (e.g., over the network(s) 199). As another example, a given client device can be utilized by multiple users in a shared setting (e.g., a group of users, a household).

The NL based response system 120 is illustrated as including an application selection engine 122, a VLM selection engine 124, a VLM input engine 126, a VLM response generation engine 128, an action selection engine 132 and an action generation engine 134. Some of the engines can be omitted/combined in various implementations. In some implementations, the engines of the NL based response system 120 are distributed across one or more computing systems. In general, the NL based response system 120 is configured to receive a natural language query via the client device 110, and to process the natural language query to generate a response to the natural language query and/or perform one or more actions via one or more further applications 160.

In various implementations, the application selection engine 122 can, in response to receiving a query, determine one or more further applications 160 to invoke. The application selection engine 122 can select applications that are relevant to the query, e.g., determine that the input query is directed towards subject matter within the domain of one or more further applications 160, and select/invoke one or more of the further applications 160 in response. For example, if the input query involves utilization of a webpage, then the application selection engine 122 can select a web browser application as one or more of the further application 160 to then access the webpage. It should be understood that the one or more further applications 160 can include any application that is accessible at the client device 110 and/or the NL based response system 120.

In various implementations, the VLM selection engine 124 can, in response to receiving a query, determine which, if any, of multiple generative model(s) (VLM(s) 150 and/or other multi-modal generative model(s)) to utilize in generating action(s) responsive to the user query. For example, the VLM selection engine 124 can select none, one, or multiple generative model(s) to utilize in generating action(s) in furtherance of the task indicated by the user query. The VLM selection engine 124 can optionally utilize one or more classifiers and/or rules (not illustrated).

In various implementations, the VLM input engine 126 can, in response to receiving a query, generate VLM input that is to be processed using a VLM in generating action(s) in response to the query. As described herein, such VLM input can include query content that is based on the query and/or additional content, such as contextual information derived from the context engine 113. The VLM input engine 126 can further retrieve structural information relating to a given UI state, for example from UI state database 116.

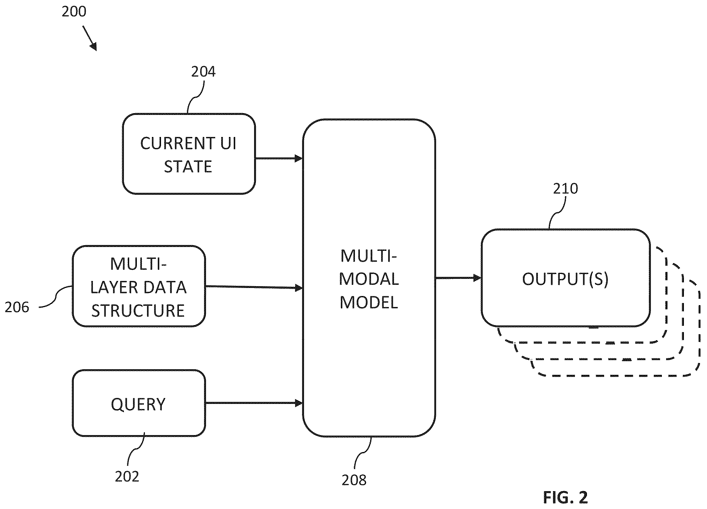

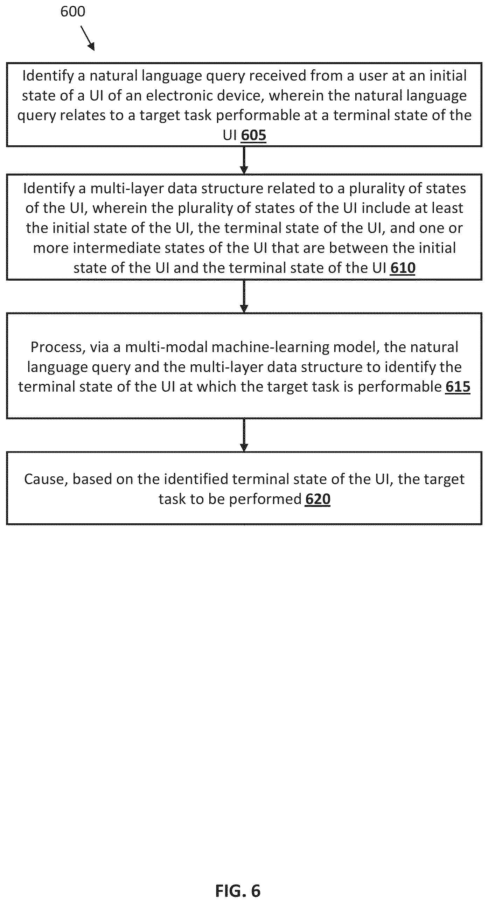

In various implementations, the VLM response generation engine 128 can process VLM input that is generated by the VLM input engine 126, using a VLM, to generate output data indicating one or more actions to be performed in furtherance of the task. The output data, for example, can include data indicating an action type (e.g., a click, a text entry, etc.) and an index of an interactable element in a given screen at which to perform the action. In some examples, the output data can include a plurality of candidate actions and respective indices. In various implementations, the VLM response generation engine 128 can perform all or aspects of the multi-modal model(s) 208 of FIG. 2, and/or one or more blocks of technique 600 of FIG. 6. The VLM response generation engine 128 can utilize one or more VLMs 150.

In various implementations, the action selection engine 132 can select one or more actions from, for example, the set of candidate actions output by the VLM response generation engine 128. The action selection engine 132 can, in some examples, select the candidate action with the highest confidence score for performance by the user device 110. In some examples, the action selection engine 132 can compare the confidence scores of the candidate actions to a threshold score. The selected action can be selected from the set of candidate actions with a confidence score that exceeds the threshold score. If no candidate action has a confidence score that exceeds the threshold score, the action selection engine 132 can select a default action, e.g., an action that outputs a request for further information via the client device 110.

In various implementations, the action generation engine 134 can convert the action selected by the action section engine 132 into one or more commands for an application that, when implemented by an application on the client device, 110, or by one or more further applications 160 cause the application to perform the selected action.

The one or more further applications 160 is illustrated as including one or more search engines 162, one or more tools 164, one or more third-party applications 164, one or more web browsers 166 and/or one or more login managers 170. Some of the engines can be omitted in various implementations. Further applications can also be included in the one or more further applications 160, such as one or more first party applications and/or other applications. The one or more further applications 160 can be executed on a virtual machine, e.g., in a secure virtual environment, such as in a secure environment in the cloud or locally on the client device 110.

In various implementations, the one or more search engines 162 can receive a search request from the NL based response system 120 and/or client device 110 and perform a search operation on a search space. The one or more search engines 162 can return one or more search results to the NL based response system 120 and/or the client device 110. The one or more search engines 162 can include an internet search engine.

In various implementations, the one or more tools 164 include, for example, applications that can be used to perform creative tasks, such as one or more image tools for creating and/or editing images, one or more document tools for reading, writing and/or editing documents, one or more audio tools for listening to, creating and/or editing audio. Many other examples are possible and are also contemplated herein.

In various implementations, the one or more third party applications 166 can include applications that are hosted and/or controlled by a third party for providing access to services that they provide. Examples of such third party applications include, but are not limited to: booking applications; e-commerce applications; translation applications; utility provider applications; calendar/diary applications; and/or the like.

In various implementations, the one or more web browsers 168 are applications that provide access to internet webpages.

In various implementations, the one or more login managers 170 can securely store login credentials (e.g., login names, passwords, etc.) of a user for respective application and/or webpages. The login manager can automatically input relevant login details to an application when it is accessed and/or to a webpage when it is loaded. However, it should be noted that the NL based response system 120 can ensure that any login credentials are not included in any VLM input, but the action selection engine 132 and/or the action generation engine 134 can cause any needed login credentials to be utilized.

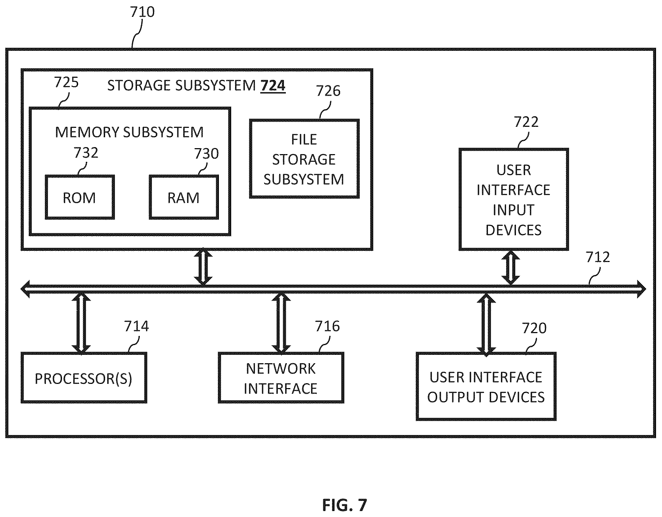

Turning now to FIG. 2, an overview of an example method 200 of controlling a user interface using a VLM is depicted. The method 200 can be performed by one or more computing systems, such as the NL based response system 120 of FIG. 1 and/or computing device 710 described herein with respect to FIG. 7.

A natural language query 202 can be received from a user via a client device such as client device 110. The natural language (NL) query 202 can be input into a multi-modal model 208 (e.g., a VLM). Additionally, one or more multi-layer data structures 206 can be input into the multi-modal model 208, for example from UI state database(s) 116. Additionally, a current UI state 204 can be input to the multi-modal model 208. Such an indication can include, for example, an index or some other type of pointer to the UI state. It will be understood that the various inputs to the multi-modal model 208 are depicted in FIG. 2 as distinct elements or inputs. However, in some implementations, various of the inputs can be combined. For example, the current UI state 204 can be an element of the multi-layer data structure 206 (or vice-versa). In some implementations, a plurality of data structures 206 can be input to the multi-modal model 208. For example, a first multi-layer data structure 206 can correspond to the operating system of the client device 110, and a second multi-layer data structure 206 can correspond to an application that is installed on the client device 110.

The natural language query 202 along with the current UI state 204 and the multi-layer data structure 206 can be provided to a multi-modal model 208. The multi-modal model 208 can be any of the multi-modal models described herein. The multi-modal model 208, using the natural language query 202, the current UI state 204, and the multi-layer data structure 206, can identify one or more outputs 210 that can relate to task(s) that are to be performed by the user device based at least in part on the natural language query. The one or more outputs 210 can, for example, be related to actions that are performed using one or more further applications 160. Additionally, or alternatively, in some implementations, the one or more outputs 210 can include information related to one or more of the further applications 160. More specifically, in some implementations, the one or more outputs 210 can include an indication of a UI state at which the task can be performed by a given application. In some implementations, the one or more outputs 210 can further include information related to one or more tasks or actions that can be performed at one or more intermediate UI states between an initial UI state and a terminal UI state which can facilitate navigation of the client device 110 between the initial UI state and the terminal UI state.

FIG. 3 depicts an example of a multi-layer data structure 300, such as the multi-layer data structure that can be provided to the multi-modal model 208 in FIG. 2. As previously described, the multi-layer data structure can be stored at least partially in the UI state database(s) 116 of the client device 110. As can be seen in FIG. 3, the data structure 300 can include a plurality of UI state layers. For example, the data structure 300 is depicted as including UI State Layer 1 305, UI State Layer 2 310, and UI State Layer n 315 (e.g., where n is a positive integer greater than two). UI State Layer 1 305 can be referred to as an "initial" layer. UI State Layer n can be referred to as a "terminal" layer. Although UI State Layer n can be referred to as a "terminal" layer, it should be understood that additional UI Layers can be beyond UI State Layer n, but that the query 202 may result in the multi-modal model 208 determining to traverse to UI State Layer n as the terminal layer. Layers between Layer 1 305 and Layer n 315, for example UI State Layer 2 310, can be referred to as "intermediate" layers. In some implementations, the current UI state 204 can be considered to be the initial UI state for the purpose of traversal of the multi-layer data structure 300. In other implementations, the current UI state 204 can be considered to be a UI state of one or more of the intermediate layers of the multi-layer data structure 300. In this implementation, traversal of the multi-layer data structure 300 can be calculated by the multi-modal model 208 such that the traversal includes traversal through the current UI state 204.

Generally, each one of the UI State Layers can be made up of or include a plurality of UI states 320. As previously noted, each UI state 320 can include a plurality of elements, and respective ones of the elements can lead to a different UI state. This can be seen in FIG. 3 by the dotted lines that indicate that a plurality of UI states (e.g., 320a, 320b, and 320c) in Layer 2 310 correspond to a single UI state 320 of Layer 1 305. It will be understood that the depicted correspondence is for the sake of discussion only, and the specific number of elements, number of layers, and/or number of states can vary in different implementations. It will be understood that, for the sake of discussion, the various UI states of the multi-layer data structure 300 are described using the generalized notation "320." Specific ones of the UI states can be described with a suffix such as states 320a, 320b, 320c, 320i, 320s, and 320t. Such suffixes are intended to designate specific states of FIG. 3, and unless otherwise stated to the contrary, the various specified states are intended to share the characteristics that are described with respect to generalized states 320.

Additionally, although FIG. 3 depicts that all of the terminal UI states 320 (e.g., terminal UI state 320t) of the multi-layer data structure 300 are in the Layer n 315, it will be understood that the multi-layer data structure 300 is not required to be organized in such a way, and that the idea of a "terminal" UI state can be considered to be a relative term. For example, a first application can include only three intermediate UI states between the initial UI state and the terminal UI state. However, a second application can include six intermediate UI states between the initial UI state and the terminal UI state. In this situation, a terminal UI state of the first application can be on a different layer of the multi-layer data structure 300 than a terminal UI state of the second application. In other implementations, the multi-layer data structure 300 can be constructed such that all of the terminal UI states are at the same layer, and the UI state traversal pathway of the first application between the initial and the terminal UI states can bypass one or more layers of the multi-layer data structure 300.

As previously described, legacy implementations would have required performing inference to move between UI states in a frame-by-frame manner, leading to increased latency and computational resource consumption. For instance, to navigate from a home screen to a specific settings page within an application, the system would need to perform inference at each step, such as opening the app, selecting the menu, and navigating to the desired settings. This process would be repeated for each UI state between the initial and terminal states, resulting in a cumulative latency. In contrast, the present approach enables the system to preconstruct a graph of UI states, reducing the number of inference steps and overall latency.

Returning to FIG. 2, in implementations of the present disclosure, the multi-layer data structure 300 enables the system to move from a UI state at Layer 1 305 to a UI state at Layer n 315 using a single inference by the multi-modal model 208, significantly reducing latency and improving user experience. By pre-constructing a graph of UI states such as graph 300, the system can identify the terminal UI state in the terminal layer (e.g., Layer n) that corresponds to a user's intent without performing inference at each intermediate UI state that can be present in the various intermediate layer(s) of the multi-layer data structure 300.

This decrease in latency can be achieved by inputting the current UI state 204, the multi-layer data structure 206, and the NL query 202 into the multi-modal model 208. As depicted in FIG. 3, the current UI state can correspond to the initial UI state, which is designated in FIG. 3 as 320s. The multi-modal model 208 can then, in a single inference call, identify the terminal UI state (designated in FIG. 3 as 320t) in the terminal layer (i.e., Layer n 315) at which the task can be performed to respond to the NL query 202. In the same inference call, the multi-modal model 208 can identify the navigation pathway 325 which can facilitate traversal of the multi-layer data structure 300 from the initial UI state 320s to the terminal UI state 320t. As shown in FIG. 3, such traversal can include traversal through one or more intermediate UI states (e.g., UI state 320i) in one or more intermediate UI State Layers (i.e., Layer 2 310) of the multi-layer data structure 300.

For example, if a user wants to order a pizza from a food delivery application, the system can use the multi-layer data structure 300 to navigate directly to the terminal UI state in the terminal layer of the multi-layer data structure 300 that relates to the order confirmation screen. In doing so, the system can bypass performing inference at the intermediate UI states related to opening the application, selecting the pizza category, choosing the toppings, and entering the delivery address. The multi-modal model 208, having access to the entire graph of UI states (e.g., multi-layer data structure 300), can identify the terminal state 320t with a single inference, enabling the system to complete the task much faster than traditional frame-by-frame approaches. In some implementations, the system can render each screen related to each of the intermediate UI states 320i as the system navigates along the navigation pathway 325 from the initial UI state 320s to the terminal UI state 320t. In other implementations, the system can forgo rendering one or more of the screens related to the various intermediate UI states 320i that are present in the intermediate pathway 325.

Furthermore, it will be understood that the multi-layer data structure 300 can allow the system to optimize the trade-off between speed and memory usage. By adjusting the depth of the graph and the amount of information stored at each of the various UI states 320, the system can fine-tune its performance based on the specific requirements of the application and/or user preferences. For instance, if a task requires a high degree of accuracy, the system can store more detailed information at each of the UI states 320. By contrast, if memory is more critical, the system can reduce the depth of the multi-layer data structure or the information stored at each of the UI states 320. Similarly, if speed is critical, then the multi-layer data structure 300 can include detailed information at each UI state 320 and have a very large number of layers and states. That way, a single inference process can allow for a plurality of possible outcomes. By contrast, if accuracy is critical, then the large data structure can be split into a plurality of data structures where an inference call is performed at each to ensure a higher possible degree of accuracy. This flexibility enables the system to adapt to a wide range of use cases and provide a seamless user experience across different applications.

In some cases, the system can not be confident in the inference result. To address this, the system can employ self-reflection mechanisms, prompting the multi-modal model 208 to assess its own confidence level. If the model expresses uncertainty, the system can engage the user for clarification. For instance, if the multi-modal model 208 identifies multiple websites that can correspond to a specific query, it can prompt the user to specify the correct one.

Similarly, upon reaching the terminal state 320t, the system can either perform the task entirely and provide confirmation to the user, or, when the system has a lower confidence score regarding the result of the inference process, the system can ask the user for verification before completion of the task. For example, consider a user trying to book a flight through an airline app. The user could speak to their device: "Book a flight to London next Tuesday." The system, employing the multi-layer data structure 300, could directly navigate to the flight booking confirmation screen, populated with flights to London for the specified date. In some implementations, the system could book the flight that most closely matches the user's request, and provide confirmation to the user of the booked flight. In some cases, details such as number of layovers, departure time, arrival time, etc. could be pre-populated based on UI state information or previously stored contextual information. In other cases, the system could move to the corresponding terminal UI state 320t and provide a related screen of the options for said flight to the user, thereby allowing the user to manually select the flight. In some implementations, the system could select one of the possible flights, or generate a ranked list of possible flights, based on the pre-populated UI state information and/or the previously stored contextual information (and/or some other data source) and provide information regarding the selected flight or the list of flights to the user for confirmation. It will be understood that these example cases are intended for the sake of discussion only, and other implementations can additionally or alternatively employ some other type of selection and/or confirmation mechanism.

Returning to the multi-layer data structure 300, the multi-layer data structure 300 can be constructed based on pre-provided data such as DOM tree structures. The DOM tree structures can include information specifying various elements of a given UI state, and the relationships among those elements. One or more of the DOM tree structures can be, for example, provided by a third party such as a developer, author, or hosting service of a webpage or application. Additionally or alternatively, one or more of the DOM tree structures can be generated by the client device 110 and/or some other electronic device that is communicatively coupled with the client device 110 based on a review of the webpage, and/or the application. In some implementations, the multi-layer data structure 300 can be built from a plurality of DOM tree structures, and each DOM tree structure can correspond to a different UI state. In other implementations, one or more of the DOM tree structures can correspond to a plurality of UI states of a webpage or application (or portion thereof). To create the multi-layer data structure 300 from the DOM tree structures, a program can review the various user-interfaceable elements of, or related to, the one or more DOM tree structures (e.g., by crawling a webpage, by crawling an application, by crawling an operating system of the electronic device, etc.).

In some implementations, the program can then create the multi-layer data structure 300 based on existing DOM tree structures. Further, in some implementations, the program can be capable of subsequently updating the multi-layer data structure 300 based on changes to the layout of a UI state or on a screen. For instance, if a button is moved on a website, the program can update the multi-layer data structure 300 based on the corresponding DOM tree structure that reflects this change. Such a review and update procedure can be triggered by a systems update on the client device 110 or an update of a webpage or application, or can be performed periodically (e.g., daily) by a background process.

In some implementations, the program can employ a multi-step review process that can consider, for example, the DOM tree structure and visual feedback of the UI state. In doing so, the program can first analyze the DOM tree structure to check for changes in the layout and organization of the elements of the UI state. If the DOM tree structure has been altered, the program can update the multi-layer data structure 300 accordingly to reflect the changes. In implementations where the DOM tree structure remains the same, the program can perform visual comparisons of the UI state to ensure co-alignment with the DOM tree structure. This can be done by capturing screenshots or visual representations of the UI state and comparing them with previously recorded visuals. For the sake of example, this can be done using simple computer vision techniques. If visual differences are identified, the program can update the multi-layer data structure 300 to reflect the visual changes. By combining DOM tree analysis with visual feedback, the program can accurately and comprehensively update the multi-layer data structure 300 to ensure its integrity and reliability over time.

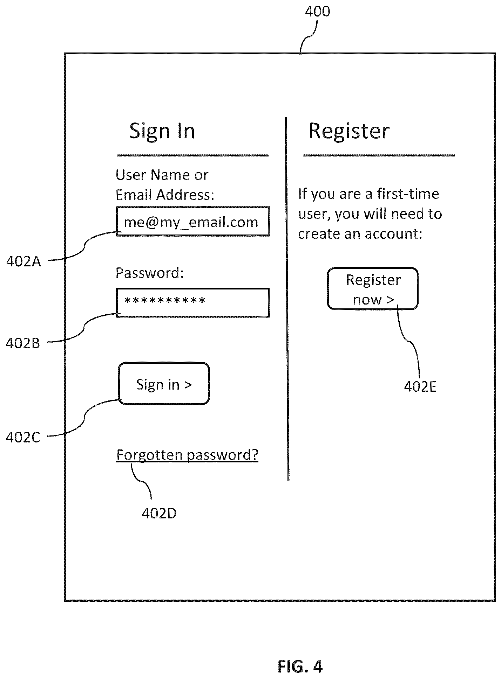

FIG. 4 illustrates a screen 400 related to a first UI state for a food delivery application. The screen 400 corresponds to an initial UI state of a multi-layer data structure, such as the data structure 300 of FIG. 3, and can correspond to a sign-in screen for the food delivery application. The screen 400 includes elements 402 of the UI state. These include element 402A, where the user can enter their username or email address, and element 402B, where they can enter their password. After entering the information at elements 402A and 402B, the user can interact with button element 402C to sign in. Element 402D is a link for users to activate if they have forgotten their password, and element 402E is a button for users to register for an account.

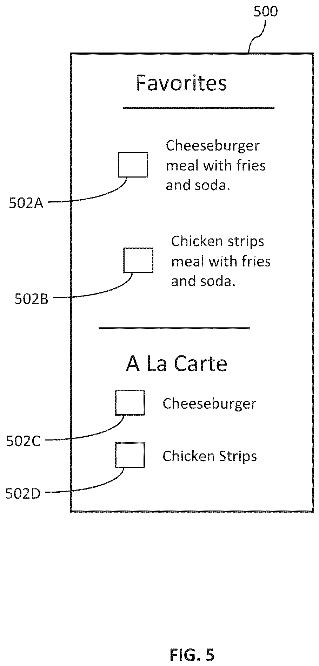

FIG. 5 illustrates a screen 500 related to a second UI state for the same food delivery application. This screen 500 can correspond to an intermediate UI state of a multi-layer data structure such as data structure 300 of FIG. 3. The system can navigate from the initial UI state related to screen 400 to the intermediate UI state related to screen 500 when the user successfully enters their information at 402A and 402B, and then presses the button at 402C. Screen 500 includes elements 502 related to ordering food. Element 502A allows the user to select a cheeseburger meal, element 502B allows the user to select a chicken strips meal, element 502C allows the user to select a cheeseburger a la carte, and element 502D allows the user to select chicken strips a la carte.

An example multi-layer data structure 300 can be constructed that includes UI states based on DOM trees related to FIG. 4 and FIG. 5. A first DOM tree can represent the structure and elements of the sign-in screen 400, while a second DOM tree can represent the structure and elements of the food selection screen 500. These DOM trees would be linked in the multi-layer data structure 300, such that a successful sign-in (interaction with 402A, 402B, and 402C) in the first DOM tree would lead to the food selection screen represented by the second DOM tree. In an alternative implementation, a single DOM tree could represent both screens 400 and 500. In this case, the DOM tree would include nodes representing both the sign-in elements (402A-E) and the food selection elements (502A-D), with the connection between them representing the UI state change upon successful login.

In such an implementation, if element 502D, initially representing chicken strips, was changed to represent a black bean burger, the multi-layer data structure 300 would be updated to reflect this change. The DOM tree structure associated with screen 500 would be modified, replacing the reference to "chicken strips" with "black bean burger." Based on the change to the DOM tree structure, the UI state 320 related to the screen of FIG. 5 would likewise be changed. This update would ensure that the multi-layer data structure 300 accurately reflects the current version of the food delivery application. If the multi-modal model 208 subsequently receives a natural language query that includes "black bean burger," the system can then process the updated multi-layer data structure 300 to facilitate navigating to the correct state of the UI to order a black bean burger a la carte.

It will be understood that the example of FIGS. 4 and 5 is intended as a high level example for the sake of showing movement from one UI state at one layer of a multi-layer data structure (e.g., layer 1305 wherein an initial UI state 320s can correspond to the screen 400 of FIG. 4) to another layer of the multi-layer data structure (e.g., layer 2 310 wherein an intermediate UI state 320i can correspond to the screen 500 of FIG. 5). In other implementations, there can be one or more additional or alternative intermediate UI states between those depicted in FIGS. 4 and 5. Additionally or alternatively, the arrangement of various elements, the types of various elements, etc. in either of the screens 400 and 500 can vary in other implementations.

FIG. 6 illustrates a flow diagram of an example technique 600 for causing a task to be performed by a client device in response to a user query, in accordance with various implementations. It will be understood that the depicted technique is intended to be a high-level example of one implementation of such a technique in accordance with the present description. Other implementations can include more or fewer elements, elements arranged in a different order than depicted, etc. Generally, technique 600, or portions thereof, can be performed by one or more elements of the NL based response system 120 of FIG. 1. In some implementations, the technique 600, or portions thereof, can be performed by one or more elements of a client device such as client device 110. In other implementations, the technique 600, or portions thereof, can be performed by one or more additional or alternative electronic devices. The various elements capable of performing the technique are broadly referred to in the present description as "the system."

At block 605, the system can identify a natural language query that is received from a user at an initial state of a user interface (UI) of an electronic device. The natural language query can relate to a target task that can be performable at a terminal state of the UI. In some implementations, the initial state is a home state of the electronic device.

At block 610, the system can identify a multi-layer data structure that is related to a plurality of states of the UI. The plurality of states of the UI include at least the initial state of the UI, the terminal state of the UI, and one or more intermediate states of the UI that are between the initial state of the UI and the terminal state of the UI. In some implementations, the multi-layer data structure includes a first sub-structure with a first initial state and a first terminal state, and a second sub-structure with a second initial state and a second terminal state, the first initial state can be the initial state of the multi-layer data structure, and the second terminal state can be the terminal state of the multi-layer data structure. In some implementations, the multi-layer data structure includes an initial layer related to the initial state of the plurality of states, an intermediate layer related to one or more of the intermediate states of the plurality of states, and a terminal layer related to at least the terminal state of the UI of the plurality of states, wherein respective states of the intermediate layer are accessible via selection of a user-interactable element of a screen of the initial state, and wherein the terminal state of the terminal layer is accessible via selection of a user-interactable element of a second screen of one or more of the intermediate states. In some implementations, the intermediate layer is between the initial layer and the terminal layer in the multi-layer data structure. In some implementations, at least two or more states of the terminal layer are related to different applications on the electronic device or different webpages that are accessible at the electronic device. In some implementations, respective states of the plurality of states are related to screens of the UI that each include a plurality of user-interactable elements. In some implementations, the multi-layer data structure is associated with an application or webpage that is accessible via the electronic device. In some implementations, the multi-layer data structure is generated based on a plurality of domain object model (DOM) tree structures. In some implementations, respective DOM tree structures of the plurality of DOM tree structures are related to respective states of the plurality of states. In some implementations, respective DOM tree structures are related to respective applications that are accessible by the electronic device. In some implementations, respective DOM tree structures are related to respective webpages that are accessible by the electronic device. In some implementations, respective DOM tree structures of the plurality of DOM tree structures are provided by a developer associated with respective applications or respective webpages. In some implementations, at least one DOM tree structure of the plurality of DOM tree structures is crawled by a program to create and/or update the multi-layer data structure.

At block 615, the system can process, via a multi-modal machine-learning model, the natural language query and the multi-layer data structure to identify the terminal state of the UI at which the target task is performable. In some implementations of the structure with a first sub-structure with a first initial state and a first terminal state, and a second sub-structure with a second initial state and a second terminal state, processing, via the multi-modal machine-learning model, the natural language query and the multi-layer data structure to identify the terminal state of the UI includes identifying, via the multi-modal machine-learning model, the second sub-structure. In some implementations, the multi-modal machine-learning model is an on-device generative model executed locally at the electronic device. In some implementations, the method includes selecting, based on terms of the natural language query referencing the application or webpage that is accessible via the client device, and from among a plurality of multi-layer data structures, the multi-layer data structure for processing via the multi-modal machine-learning model. In some implementations, the method includes selecting, based on capabilities of the application or webpage that is accessible via the client device, and from among a plurality of multi-layer data structures, the multi-layer data structure for processing via the multi-modal machine-learning model. In some implementations, the initial state is a state of the initial layer and the terminal state is a state of the terminal layer.

At block 620, the system can cause, based on the identified terminal state of the UI, the target task to be performed. In some implementations, performance of the target task includes providing, to the user at the initial state, a prompt related to verification of the terminal state. In some implementations, the prompt is provided to the user while rendering at least a portion of a screen related to the initial state. In some implementations, causing the target task to be performed based on the identified terminal state of the UI includes causing the electronic device to navigate from the initial state of the UI to the terminal state of the UI. In some implementations, causing the electronic device to navigate from the initial state of the UI to the terminal state of the UI comprises causing the electronic device to navigate from the initial state of the UI to the terminal state of the UI without rendering any of the one or more intermediate states of the UI. In some implementations, causing the electronic device to navigate from the initial state of the UI to the terminal state of the UI includes causing the electronic device to navigate from the initial state of the UI to the terminal state of the UI while rendering one or more of the intermediate states of the UI. In some implementations, causing the electronic device to navigate from the initial state of the UI to the terminal state is based on a single call to the multi-modal machine-learning model. In some implementations, the UI can be a graphical UI (GUI).

Turning now to FIG. 7, a block diagram of an example computing device 710 that can optionally be utilized to perform one or more aspects of techniques described herein is depicted. In some implementations, one or more of a client device, cloud-based automated assistant component(s), and/or other component(s) can include one or more components of the example computing device 710. The computing device 710 can be used to implement, for example, the client device 110 of FIG. 1. In some implementations, the computing device 710 can additionally or alternatively be used to implement the NL based response system 120, the VLM(s) 150, and/or the further application(s) 160.

Computing device 710 can include at least one processor 714, which can communicate with a number of peripheral devices via bus subsystem 712. These peripheral devices can include, for example, a storage subsystem 724. The storage subsystem can include, for example, one or more of a memory subsystem 725, a file storage subsystem 726, a user interface output device 720, a user interface input device 722, and a network interface subsystem 716. The input and output devices 720 and 722 can allow user interaction with computing device 710 and can be part of or otherwise related to a GUI such as GUI 114. Network interface subsystem 716 can provide an interface to outside networks, and can be coupled to corresponding interface devices in other computing devices.

User interface input devices 722 can include, for example, one or more of a keyboard, pointing devices such as a mouse, trackball, touchpad, or graphics tablet, a scanner, a touch screen incorporated into the display, audio input devices such as voice recognition systems, microphones, and/or other types of input devices. In general, use of the term "input device" is intended to include all possible types of devices and ways to input information into computing device 710 or onto a communication network.

User interface output devices 720 can include, for example, a display subsystem, a printer, a fax machine, or non-visual displays such as audio output devices. The display subsystem can include a cathode ray tube (CRT), a flat-panel device such as a liquid crystal display (LCD), a projection device, or some other mechanism for creating a visible image. The display subsystem can additionally or alternatively provide non-visual display such as via audio output devices. In general, use of the term "output device" is intended to include all possible types of devices and ways to output information from computing device 710 to the user and/or to another machine or computing device.

Storage subsystem 724 can store programming and data constructs that provide the functionality of some, or all, of the modules described herein. For example, the storage subsystem 724 can include the logic to perform selected aspects of the methods disclosed herein, as well as to implement various components such as those depicted in FIG. 1.

Software programs or modules (e.g., the multi-modal model 208) of the computing device 710 can be executed by processor 714 alone or in combination with other processors. Memory 725 used in the storage subsystem 724 can include a number of memories including a main random access memory (RAM) 730 for storage of instructions and data during program execution and a read only memory (ROM) 732 in which fixed instructions are stored. A file storage subsystem 726 can provide persistent storage for program and data files, and can include a hard disk drive, a floppy disk drive along with associated removable media, a CD-ROM drive, an optical drive, or removable media cartridges. The modules implementing the functionality of certain implementations can be stored by file storage subsystem 726 in the storage subsystem 724, or in other machines accessible by the processor(s) 714.

Bus subsystem 712 can provide a mechanism for letting the various components and subsystems of computing device 710 communicate with each other as intended. Although bus subsystem 712 is shown schematically as a single bus, alternative implementations of the bus subsystem 712 can use multiple buses.

Computing device 710 can be of varying types including a workstation, server, computing cluster, blade server, server farm, or some other data processing system or computing device. Due to the ever-changing nature of computers and networks, the description of computing device 710 depicted in FIG. 7 is intended only as a specific example for purposes of illustrating some implementations. Many other configurations of computing device 710 are possible having more or fewer components than the computing device depicted in FIG. 7.

In situations in which the systems described herein collect or otherwise monitor personal information about users, or can make use of personal and/or monitored information), the users can be provided with an opportunity to control whether programs or features collect user information (e.g., information about a user's social network, social actions or activities, profession, a user's preferences, or a user's current geographic location), or to control whether and/or how to receive content from the content server that can be more relevant to the user. Also, certain data can be treated in one or more ways before it is stored or used, so that personal identifiable information is removed. For example, a user's identity can be treated so that no personal identifiable information can be determined for the user, or a user's geographic location can be generalized where geographic location information is obtained (such as to a city, ZIP code, or state level), so that a particular geographic location of a user cannot be determined. Thus, the user can have control over how information is collected about the user and/or used.

In situations in which the systems described herein collect personal information about users (or as often referred to herein, "participants"), or can make use of personal information, the users can be provided with an opportunity to control whether programs or features collect user information (e.g., information about a user's social network, social actions or activities, profession, a user's preferences, or a user's current geographic location), or to control whether and/or how to receive content from the content server that can be more relevant to the user. Also, certain data can be treated in one or more ways before it is stored or used, so that personal identifiable information is removed. For example, a user's identity can be treated so that no personal identifiable information can be determined for the user, or a user's geographic location can be generalized where geographic location information is obtained (such as to a city, ZIP code, or state level), so that a particular geographic location of a user cannot be determined. Thus, the user can have control over how information is collected about the user and/or used.

In various implementations, a method implemented by one or more processors can include identifying a natural language query received from a user at an initial state of a user interface (UI) of an electronic device, where the natural language query relates to a target task performable at a terminal state of the UI. Also, a multi-layer data structure related to a plurality of states of the UI can be identified, where the plurality of states of the UI include at least the initial state of the UI, the terminal state of the UI, and one or more intermediate states of the UI that are between the initial state of the UI and the terminal state of the UI. Furthermore, the natural language query and the multi-layer data structure can be processed, via a multi-modal machine-learning model, to identify the terminal state of the UI at which the target task is performable, and based on the identified terminal state of the UI, the target task can be caused to be performed.

These and other implementations of the technology described herein can optionally include one or more of the following features.

In various implementations, the multi-layer data structure can include an initial layer related to the initial state of the plurality of states, an intermediate layer related to one or more of the intermediate states of the plurality of states, and a terminal layer related to at least the terminal state of the UI of the plurality of states. Respective states of the intermediate layer can be accessible via selection of a user-interactable element of a screen of the initial state. The terminal state of the terminal layer can be accessible via selection of a user-interactable element of a second screen of one or more of the intermediate states.

In various implementations, the initial state can be a state of the initial layer and the terminal state can be a state of the terminal layer.

In various implementations, the intermediate layer can be between the initial layer and the terminal layer in the multi-layer data structure.

In various implementations, at least two or more states of the terminal layer can be related to different applications on the electronic device or different webpages that are accessible at the electronic device.

In various implementations, the initial state can be a home state of the electronic device.

In various implementations, the multi-layer data structure can include a first sub-structure with a first initial state and a first terminal state, and a second sub-structure with a second initial state and a second terminal state. The first initial state can be the initial state of the multi-layer data structure, the second terminal state can be the terminal state of the multi-layer data structure, and processing, via the multi-modal machine-learning model, the natural language query and the multi-layer data structure to identify the terminal state of the UI can include identifying, via the multi-modal machine-learning model, the second sub-structure.

In various implementations, performance of the target task can include providing, to the user at the initial state, a prompt related to verification of the terminal state.

In various implementations, the prompt can be provided to the user while rendering at least a portion of a screen related to the initial state.

In various implementations, the multi-layer data structure can be generated based on a plurality of domain object model (DOM) tree structures.

In various implementations, respective DOM tree structures of the plurality of DOM tree structures can be related to respective states of the plurality of states.

In various implementations, respective DOM tree structures can be related to respective applications that are accessible by the electronic device.

In various implementations, respective DOM tree structures can be related to respective webpages that are accessible by the electronic device.

In various implementations, respective DOM tree structures of the plurality of DOM tree structures can be provided by a developer associated with respective applications or respective webpages.

In various implementations, at least one DOM tree structure of the plurality of DOM tree structures can be crawled by a program to create and/or update the multi-layer data structure.

In various implementations, respective states of the plurality of states can be related to screens of the UI that each include a plurality of user-interactable elements.

In various implementations, the multi-modal machine-learning model can be an on-device generative model executed locally at the electronic device.

In various implementations, the multi-layer data structure related to the plurality of states of the UI can be associated with an application or webpage that is accessible via the electronic device.

In various implementations, based on terms of the natural language query referencing the application or webpage that is accessible via the client device, the multi-layer data structure for processing via the multi-modal machine-learning model can be selected from among a plurality of multi-layer data structures.

In various implementations, based on capabilities of the application or webpage that is accessible via the client device, the multi-layer data structure for processing via the multi-modal machine-learning model can be selected from among a plurality of multi-layer data structures.

In various implementations, causing the target task to be performed based on the identified terminal state of the UI can include causing the electronic device to navigate from the initial state of the UI to the terminal state of the UI.

In various implementations, causing the electronic device to navigate from the initial state of the UI to the terminal state of the UI can include causing the electronic device to navigate from the initial state of the UI to the terminal state of the UI without rendering any of the one or more intermediate states of the UI.

In various implementations, causing the electronic device to navigate from the initial state of the UI to the terminal state of the UI can include causing the electronic device to navigate from the initial state of the UI to the terminal state of the UI while rendering one or more of the intermediate states of the UI.

In various implementations, causing the electronic device to navigate from the initial state of the UI to the terminal state can be based on a single call to the multi-modal machine-learning model.

In various implementations, the UI can be a graphical UI (GUI).

In addition, some implementations include one or more processors (e.g., central processing unit(s) (CPU(s)), graphics processing unit(s) (GPU(s), and/or tensor processing unit(s) (TPU(s)) of one or more computing devices, where the one or more processors are operable to execute instructions stored in associated memory, and where the instructions are configured to cause performance of any of the aforementioned methods. Some implementations also include one or more non-transitory computer readable storage media storing computer instructions executable by one or more processors to perform operations of any of the aforementioned methods. Some implementations also include a computer program product including instructions executable by one or more processors to perform operations of any of the aforementioned methods.

It should be appreciated that all combinations of the foregoing concepts and additional concepts described in greater detail herein are contemplated as being part of the subject matter disclosed herein. For example, all combinations of claimed subject matter appearing at the end of this disclosure are contemplated as being part of the subject matter disclosed herein.

The following numbered examples are also disclosed.

Example 1. A method implemented by one or more processors, the method comprising: identifying a natural language query received from a user at an initial state of a user interface (UI) of an electronic device, wherein the natural language query relates to a target task performable at a terminal state of the UI; identifying a multi-layer data structure related to a plurality of states of the UI, wherein the plurality of states of the UI include at least the initial state of the UI, the terminal state of the UI, and one or more intermediate states of the UI that are between the initial state of the UI and the terminal state of the UI; processing, via a multi-modal machine-learning model, the natural language query and the multi-layer data structure to identify the terminal state of the UI at which the target task is performable; and causing, based on the identified terminal state of the UI, the target task to be performed.

Example 2. The method of example 1, wherein the multi-layer data structure includes: an initial layer related to the initial state of the plurality of states; an intermediate layer related to one or more of the intermediate states of the plurality of states; and a terminal layer related to at least the terminal state of the UI of the plurality of states; wherein respective states of the intermediate layer are accessible via selection of a user-interactable element of a screen of the initial state, and wherein the terminal state of the terminal layer is accessible via selection of a user-interactable element of a second screen of one or more of the intermediate states.

Example 3. The method of example 2, wherein the initial state is a state of the initial layer and the terminal state is a state of the terminal layer.

Example 4. The method of example 2 or example 3, wherein at least two or more states of the terminal layer are related to different applications on the electronic device or different webpages that are accessible at the electronic device.

Example 5. The method of example 1, wherein the initial state is a home state of the electronic device.

Example 6. The method of example 1, wherein: the multi-layer data structure includes a first sub-structure with a first initial state and a first terminal state, and a second sub-structure with a second initial state and a second terminal state; the first initial state is the initial state of the multi-layer data structure; the second terminal state is the terminal state of the multi-layer data structure; and processing, via the multi-modal machine-learning model, the natural language query and the multi-layer data structure to identify the terminal state of the UI includes identifying, via the multi-modal machine-learning model, the second sub-structure.

Example 7. The method of any of examples 1 to 6, wherein performance of the target task includes providing, to the user at the initial state, a prompt related to verification of the terminal state.

Example 8. The method of any of examples 1 to 7, wherein the multi-layer data structure is generated based on a plurality of domain object model (DOM) tree structures.

Example 9. The method of example 8, wherein respective DOM tree structures of the plurality of DOM tree structures are related to respective states of the plurality of states.

Example 10. The method of any of examples 1 to 9, wherein respective states of the plurality of states are related to screens of the UI that each include a plurality of user-interactable elements.

Example 11. The method of any of examples 1 to 10, wherein the multi-modal machine-learning model is an on-device generative model executed locally at the electronic device.

Example 12. The method of any of examples 1 to 11, wherein the multi-layer data structure related to the plurality of states of the UI is associated with an application or webpage that is accessible via the electronic device.

Example 13. The method of example 12, further comprising: selecting, based on terms of the natural language query referencing the application or webpage that is accessible via the client device, and from among a plurality of multi-layer data structures, the multi-layer data structure for processing via the multi-modal machine-learning model.

Example 14. The method of example 12, further comprising: selecting, based on capabilities of the application or webpage that is accessible via the client device, and from among a plurality of multi-layer data structures, the multi-layer data structure for processing via the multi-modal machine-learning model.

Example 15. The method of any of examples 1 to 14, wherein causing the target task to be performed based on the identified terminal state of the UI comprises: causing the electronic device to navigate from the initial state of the UI to the terminal state of the UI.

Example 16. The method of example 15, wherein causing the electronic device to navigate from the initial state of the UI to the terminal state of the UI comprises: causing the electronic device to navigate from the initial state of the UI to the terminal state of the UI without rendering any of the one or more intermediate states of the UI.

Example 17. The method of example 15, wherein causing the electronic device to navigate from the initial state of the UI to the terminal state of the UI comprises: causing the electronic device to navigate from the initial state of the UI to the terminal state of the UI while rendering one or more of the intermediate states of the UI.

Example 18. The method of example 15, wherein causing the electronic device to navigate from the initial state of the UI to the terminal state is based on a single call to the multi-modal machine-learning model.

Example 19. One or more non-transitory computer-readable media comprising instructions that, upon execution of the instructions by one or more processors of a computing device, are to cause the computing device to: identify a natural language query received from a user at an initial state of a user interface (UI) of an electronic device, wherein the natural language query relates to a target task performable at a terminal state of the UI; identify a multi-layer data structure related to a plurality of states of the UI, wherein the plurality of states of the UI include at least the initial state of the UI, the terminal state of the UI, and one or more intermediate states of the UI that are between the initial state of the UI and the terminal state of the Ul; process, via a multi-modal machine-learning model, the natural language query and the multi-layer data structure to identify the terminal state of the UI at which the target task is performable; and cause, based on the identified terminal state of the UI, the target task to be performed.

Example 20. An electronic system comprising: memory to store a natural language query received from a user at an initial state of a user interface (UI) of an electronic device, wherein the natural language query relates to a target task performable at a terminal state of the Ul; and one or more processors configured to: identify a multi-layer data structure related to a plurality of states of the UI, wherein the plurality of states of the UI include at least the initial state of the UI, the terminal state of the UI, and one or more intermediate states of the UI that are between the initial state of the UI and the terminal state of the UI; process, via a multi-modal machine-learning model, the natural language query and the multi-layer data structure to identify the terminal state of the UI at which the target task is performable; and cause, based on the identified terminal state of the UI, the target task to be performed.

## Claims

1. A method implemented by one or more processors, the method comprising:
identifying a natural language query received from a user at an initial state of a user interface (UI) of an electronic device, wherein the natural language query relates to a target task performable at a terminal state of the UI;
identifying a multi-layer data structure related to a plurality of states of the UI, wherein the plurality of states of the UI include at least the initial state of the UI, the terminal state of the UI, and one or more intermediate states of the UI that are between the initial state of the UI and the terminal state of the UI;
processing, via a multi-modal machine-learning model, the natural language query and the multi-layer data structure to identify the terminal state of the UI at which the target task is performable; and
causing, based on the identified terminal state of the UI, the target task to be performed.

2. The method of claim 1, wherein the multi-layer data structure includes:
an initial layer related to the initial state of the plurality of states;
an intermediate layer related to one or more of the intermediate states of the plurality of states; and
a terminal layer related to at least the terminal state of the UI of the plurality of states;
wherein respective states of the intermediate layer are accessible via selection of a user-interactable element of a screen of the initial state, and
wherein the terminal state of the terminal layer is accessible via selection of a user-interactable element of a second screen of one or more of the intermediate states.

3. The method of claim 2,
wherein the initial state is a state of the initial layer and the terminal state is a state of the terminal layer; and/or
wherein at least two or more states of the terminal layer are related to different applications on the electronic device or different webpages that are accessible at the electronic device.

4. The method of claim 1, wherein the initial state is a home state of the electronic device.

5. The method of claim 1, wherein:
the multi-layer data structure includes a first sub-structure with a first initial state and a first terminal state, and a second sub-structure with a second initial state and a second terminal state;
the first initial state is the initial state of the multi-layer data structure;
the second terminal state is the terminal state of the multi-layer data structure; and
processing, via the multi-modal machine-learning model, the natural language query and the multi-layer data structure to identify the terminal state of the UI includes identifying, via the multi-modal machine-learning model, the second sub-structure.

6. The method of any of claims 1 to 5, wherein performance of the target task includes providing, to the user at the initial state, a prompt related to verification of the terminal state.

7. The method of any of claims 1 to 6, wherein the multi-layer data structure is generated based on a plurality of domain object model (DOM) tree structures,
optionally, wherein respective DOM tree structures of the plurality of DOM tree structures are related to respective states of the plurality of states.

8. The method of any of claims 1 to 7, wherein respective states of the plurality of states are related to screens of the UI that each include a plurality of user-interactable elements.

9. The method of any of claims 1 to 8, wherein the multi-modal machine-learning model is an on-device generative model executed locally at the electronic device.

10. The method of any of claims 1 to 9 wherein the multi-layer data structure related to the plurality of states of the UI is associated with an application or webpage that is accessible via the electronic device.

11. The method of claim 10, further comprising:
selecting, based on terms of the natural language query referencing the application or webpage that is accessible via the electronic device, and from among a plurality of multi-layer data structures, the multi-layer data structure for processing via the multi-modal machine-learning model; or
selecting, based on capabilities of the application or webpage that is accessible via the electronic device, and from among a plurality of multi-layer data structures, the multi-layer data structure for processing via the multi-modal machine-learning model.

12. The method of any of claims 1 to 11, wherein causing the target task to be performed based on the identified terminal state of the UI comprises:
causing the electronic device to navigate from the initial state of the UI to the terminal state of the UI.

13. The method of claim 12, wherein:
causing the electronic device to navigate from the initial state of the UI to the terminal state of the UI comprises causing the electronic device to navigate from the initial state of the UI to the terminal state of the UI without rendering any of the one or more intermediate states of the UI; or
causing the electronic device to navigate from the initial state of the UI to the terminal state of the UI comprises causing the electronic device to navigate from the initial state of the UI to the terminal state of the UI while rendering one or more of the intermediate states of the UI; or
causing the electronic device to navigate from the initial state of the UI to the terminal state of the UI is based on a single call to the multi-modal machine-learning model.

14. One or more non-transitory computer-readable media comprising instructions that, upon execution of the instructions by one or more processors of a computing device, are to cause the computing device to perform the method of any of claims 1 to 13.

15. An electronic system comprising:
memory to store a natural language query received from a user at an initial state of a user interface (UI) of an electronic device, wherein the natural language query relates to a target task performable at a terminal state of the Ul; and
one or more processors configured to:
identify a multi-layer data structure related to a plurality of states of the UI, wherein the plurality of states of the UI include at least the initial state of the UI, the terminal state of the UI, and one or more intermediate states of the UI that are between the initial state of the UI and the terminal state of the UI;
process, via a multi-modal machine-learning model, the natural language query and the multi-layer data structure to identify the terminal state of the UI at which the target task is performable; and
cause, based on the identified terminal state of the UI, the target task to be performed.
